# EUROPÄISCHE PATENTANMELDUNG

(11) **EP 0 709 239 A1**
(43) Veröffentlichungstag der Anmeldung: **01.05.1996**
(21) Anmeldenummer: 95116857.4
(22) Anmeldetag: 26.10.1995
(51) Int. Cl.: B60G 11/27, F16F 9/04

(54) **Vorrichtung zur Federung oder Dämpfung einer Achse für Strassenfahrzeuge**

(30) Priorität: 26.10.1994 DE 4438217
(71) Anmelder: Continental Aktiengesellschaft, D-30165 Hannover (DE)
(72) Erfinder: Schneider, Eckhard, Dr., D-31275 Lehrte (DE)

(57) **Zusammenfassung**

Eine Vorrichtung zur Federung oder Dämpfung einer Achse für Straßenfahrzeuge weist einen am Fahrzeugrahmen angebrachten Achskörper und federnd gelagerte Schwinghebel auf, an denen die Räder drehbar gelagert sind. Der Achskörper besteht aus einem am Fahrzeugrahmen angebrachten Außenrohr (11) und einem drehbar im Außenrohr (11) gelagerten, mit dem Schwinghebel (15) drehfest verbundenen Innenrohr (13). Außenrohr (11) und Innenrohr (13) weisen nach innen bzw. außen ragende radiale Schaufeln auf. Jeweils eine Außenschaufel (21) und eine Innenschaufel (22) bilden einen Federraum, in dem mindestens ein fluidgefüllter, flexibler, elastischer Hohlkörper (25) angeordnet ist.

## Beschreibung

Die Erfindung betrifft eine Vorrichtung zur Federung oder Dämpfung einer Achse für Straßenfahrzeuge, mit einem am Fahrzeugrahmen angebrachten Achskörper und federnd gelagerten Schwinghebeln, an denen die Räder drehbar gelagert sind.

Luftgefederte Achsen sind hinlänglich bekannt. Zum Beispiel ist es aus der DE-OS 24 01 242 bekannt, eine Luftfederachse mit Luftfederbalgträgern auszustatten, die an über die Befestigung des Achskörpers hinausgehenden Verlängerungen der Lenkerfeder befestigt sind.

Aus dem DE-GM 73 06 772 ist es bekannt, ein in sich geschlossenes, keilförmiges, waagerecht angeordnetes Luftfederelement, das unter Überdruck steht, zwischen Fahrzeugchassis und Blattfeder anzuordnen.

Der Erfindung liegt die Aufgabe zugrunde, ein Fahrzeugrad mittels einer Achsaufnahme zu führen und mit geringem Aufwand abzufedern oder zu dämpfen.

Die Aufgabe wird erfindungsgemäß durch die im Kennzeichen des Patentanspruchs 1 genannten Merkmale gelöst.

Durch die Erfindung wird eine Schlauchlagerachse geschaffen, bei der durch die Einfederbewegung des Schwinghebels die flexiblen Hohlkörper im Achskörper durch die relative Verdrehung zwischen Innenrohr und Außenrohr komprimiert werden. Die Schaufeln des Innenrohres wirken gegen die druckbeaufschlagten Hohlkörper, so daß das eingeschlossene Fluidvolumen, z.B. ein Gas, komprimiert wird.

In vorteilhafter Ausgestaltung der Erfindung ist die Druckbeaufschlagung der fluidgefüllten, flexiblen, elastischen Hohlkörper steuerbar. Durch diese variierbare Druckbeaufschlagung können die Feder- und/oder Dämpfungseigenschaften der Achse eingestellt werden. Beinhalten die elastischen Hohlkörper Flüssigkeiten und sind sie über steuerbare Ventilleitungen untereinander oder mit geeigneten Druckspeichern verbunden, kann auf einfache und vorteilhafte Weise eine hydraulische Dämpfung der Achse erzielt werden.

In weiterer vorteilhafter Ausgestaltung der Erfindung sind die elastischen Hohlkörper gewebeverstärkte Gummischläuche.

Anhand der Zeichnung wird nachstehend ein Ausführungsbeispiel der Erfindung näher erläutert. Es zeigt
- Fig. 1: in schematischer Darstellung eine räumliche Anordnung einer Achse,
- Fig. 2: einen Querschnitt durch den Achskörper unter Darstellung eines Viertelachsrohrs.

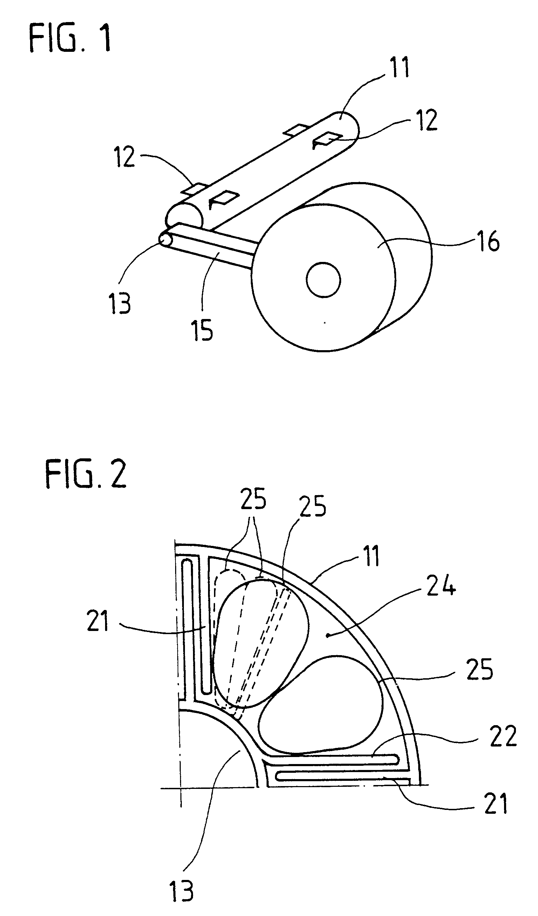

Der Achskörper (Fig. 1) weist ein Außenrohr 11 als Achsaufnahme auf, das über angeschweißte Befestigungslaschen 12 am Kraftfahrzeugchassis befestigt ist. In dem Außenrohr 11 ist als Innenachse ein Innenrohr 13 drehbar gelagert angeordnet. Die Lagerung ist in den Stirnbereichen des Außenrohres 11 vorgesehen. Im mittleren Bereich ist der später noch beschriebene Federkörper angeordnet. Das Innenrohr 13 ist an beiden Enden mit Schwinghebeln 15 verbunden, an deren Enden die Räder 16 drehbar gelagert angeordnet sind.

In der schematischen, vergrößerten Darstellung gemäß Fig. 2 wird ersichtlich, daß das Außenrohr 11 auf seinem Innenumfang radial nach innen ragende, stationär angebrachte Schaufeln 21 in einem Winkelabstand von 90° zueinander aufweist. Diese stationären Schaufeln 21 decken ungefähr den Ringabstand zwischen Außenrohr 11 und konzentrischem Innenrohr 13 ab. Das Innenrohr 13 weist auf seinem Außenumfang sich radial nach außen erstreckende stationäre Schaufeln 22 auf, die ebenfalls geringfügig kürzer sind als die lichte Weite des Kreisringabstandes zwischen Innen- und Außenrohr 11. Je eine stationäre Schaufel 21 des Außenrohres 11 und eine stationäre Schaufel 22 des Innenrohres 13 sind zueinander benachbart angeordnet. Sie bilden einen Federraum 24, in dem zwei luftgefüllte, flexible, elastische Hohlkörper 25 aus einer gummibeschichteten Gewebebahn angeordnet sind.

Die gestrichelte Darstellung zeigt die vollständig eingefederte Stellung der Achse, wobei die Innenschaufeln 22 sich gegenüber den Außenschaufeln 21 verdreht und die jeweilige Federkammer 24 verkleinert haben. Dadurch sind die elastischen Kohlkörper 25, die eine ovale Ausbildung haben und schlauchähnlich in dem Achskörper angeordnet sind, komprimiert. Die schlauchförmigen Hohlkörper 25 sind mit einem Überdruck von 1 bis 15 bar beaufschlagt.

Die durchgezogene Darstellung der Hohlkörper 25 in Fig. 2 zeigt die ausgefederte Stellung des Achskörpers.

Bei einer Einfederung der Schwinghebel 15 werden die schlauchförmigen Kohlkörper 25 komprimiert, da die Schaufeln 22 des drehbaren Innenrohres 13 gegen die sich an den Schaufeln 21 des stationären Außenrohres 11 abstützenden schlauchförmigen Hohlkörper 25 wirken. Die schlauchförmigen Hohlkörper 25 liegen konzentrisch um das Innenrohr 13 angeordnet.

Sollen unterschiedliche Feder- und Dämpfungswirkungen erzielt werden, ist es vorteilhaft, die schlauchförmigen Hohlkörper 25 mit einer Druckmittelquelle zu verbinden und den Druck unterschiedlich einzusteuern.

## Patentansprüche

1. Vorrichtung zur Federung oder Dämpfung einer Achse für Straßenfahrzeuge, mit einem am Fahrzeugrahmen angebrachten Achskörper und federnd gelagerten Schwinghebeln, an denen die Räder drehbar gelagert sind,
**gekennzeichnet durch folgende Merkmale:**
1) der Achskörper besteht aus einem am Fahrzeugrahmen angebrachten Außenrohr (11) und einem drehbar im Außenrohr (11) gelagerten, mit dem Schwinghebel (15) drehfest verbundenen Innenrohr (13),
2) das Außenrohr (11) weist innen über den Umfang in Abständen stationär angebrachte radiale Schaufeln (21) auf,
3) das Innenrohr (13) weist auf dem Außenumfang sich radial nach außen erstreckende, in Abständen fest angebrachte Schaufeln (22) auf,
4) die Schaufeln (22) des Außenrohres (11) und die Schaufeln (22) des Innenrohres (13) sind derart angeordnet, daß sie sich überdecken und jeweils eine Außenschaufel (21) und eine Innenschaufel (22) einen Federraum (24) bilden,
5) in jedem Federraum (24) ist mindestens ein fluidgefüllter, flexibler, elastischer Hohlkörper (25) angeordnet.

2. Vorrichtung nach Anspruch 1, dadurch gekennzeichnet, daß die Druckbeaufschlagung der fluidgefüllten, flexiblen, elastischen Hohlkörper (25) steuerbar ist.

3. Vorrichtung nach Anspruch 1, dadurch gekennzeichnet, daß die flexiblen, elastischen Hohlkörper (25) schlauchförmig ausgebildet sind.
